Europäisches Patentamt

(19) European Patent Office

Office européen des brevets

(11) Publication number: **0 230 198**
**B1**

# (12) EUROPEAN PATENT SPECIFICATION

(45) Date of publication of the patent specification:
28.03.90

(51) Int. Cl.⁴: **G01P 15/13**

(21) Application number: **86402976.4**

(22) Date of filing: **31.12.86**

(54) Triaxial electrostatic accelerometer with dual electrical connection to its test weight.

(30) Priority: **31.12.85 FR 8519469**

(43) Date of publication of application:
**29.07.87 Bulletin 87/31**

(45) Publication of the grant of the patent:
**28.03.90 Bulletin 90/13**

(84) Designated Contracting States:
**DE GB IT**

(56) References cited:
**EP-A- 0 127 500**
**DE-A- 2 814 794**
**FR-A- 2 454 103**
**US-A- 3 229 530**

(73) Proprietor: **OFFICE NATIONAL D'ETUDES ET DE RECHERCHES AEROSPATIALES(O.N.E.R.A.), 29, avenue de la Division Leclerc, F-92320 Chatillon (Hauts de Seine)(FR)**

(72) Inventor: **Bernard, Alain, 2, Allée des Renardeaux, F-94260 Fresnes(FR)**
Inventor: **Touboul,Pierre, 19, Clos des Bleuets Domaine des Garandes, F-78280 Guyancourt(FR)**

(74) Representative: **Martinet & Lapoux, 62, rue des Mathurins, F-75008 Paris(FR)**

## Description

This invention concerns those accelerometers in which the acceleration measurement is deduced from that of the forces required to hold a test weight still or bring it back to a position defined with respect to the body of the apparatus. It concerns more particularly those accelerometers where these forces are electrostatically produced.

FR-B-2511509 filed December 31, 1980 disclosed an accelerometer of this type in which the test weight has a cruciform structure and is formed of three plane rectangular plates the planes of which are two by two orthogonal.

EP-A-0118359 filed February 28, 1984 disclosed a test weight comprising plane surface elements, two by two opposite and parallel forming three pairs of surface elements, the directions normal to these elements corresponding to the sensitive axes of the accelerometer. In this document the form recommended for the test weight is a cube.

EP-A-0127500 filed April 20, 1984 disclosed another configuration of the test weight and the suspension electrode system. In this document the recommended arrangement allows a rigid test weight to be abtained with a large surface to weight ratio and use plane electrode systems made by metal sputtering in vacuum on an insulating substrate.

According to Fig.1 of this document the test weight is formed by six thin plates, the length of which is equal to two times the width a. These six plates 1 to 6 are arranged in order to form a cube having an edge a. Each plate projects beyond the limits of the cube on both sides thereof by a lenght equal to a/2.

Whichever be the configuration selected among those previously recommended, a feedback electrostatic suspension arrangement of the six degrees of freedom of the test weight can be implemented without any conductor connection to the test weight (configuration disclosed in the document EP-A-0118359) or with an electric link to the test weight (configuration disclosed in the document FR-B-2511509).

Generally the invention concerns an electrostatic accelerometer with a test weight having portions thereof defining movable electrodes and an accelerometer body having portions thereof defining stationary electrodes. The movable electrodes and the stationary electrodes form capacitors serving both as position sensing capacitors and position control capacitors. The movable electrodes are divided into two sets insulated from each other and these sets are fed through two flexible leads.

It is a primary object of the invention to simplify the electronic portion of the accelerometer by reducing the number of control amplifiers used to apply the control voltages to the position control electrodes.

In lieu ot the requirement for one amplifier per electrode attendant to the prior art, in the arrangement proposed hereinafter the opposite electrodes are connected together and thus supplied by a single amplifier. This reduction by a factor of two of the number of amplifiers is accompanied by a substantial reduction of power consumption by the accelerometer. It also improves its reliability and eliminates a good part of the drawbacks associated with differences in characteristics among the amplifiers.

Another object of the invention is to improve the stability of the test weight controlled position relative to the electrodes by reducing the sensitivity of the position detection electrodes or sensors to changes in the stray capacitances of the leads to the said electrodes. This improvement contributes to better overall performance of the accelerometer and especially to greater stability of the biases.

Still another object of the invention is to enable greater miniaturization of the capacitive position sensors by eliminating the differential transformers used in the previous arrangements described in the three aforementioned patents.

The invention will now be described in greater detail, with reference to the appended drawings in which :

Figure 1 diagrams one of the possible shapes of the test weight;

Figure 2 reproduces the configuration adopted, on each axis of the accelerometer, for the translational $V_x$ and rotational $V_\phi$ control voltages, and for the bias voltage $V_p$ when, in accordance with Patent FR-B-2511509, a single electrical lead to the test weight is utilized;

Figure 3 is a block diagram of the control loop corresponding to the configuration of Figure 2;

Figure 4 diagrams the operating principle of a differential-transformer-based capacitive detector intended for the accelerometer configuration shown in Figures 2 and 3.

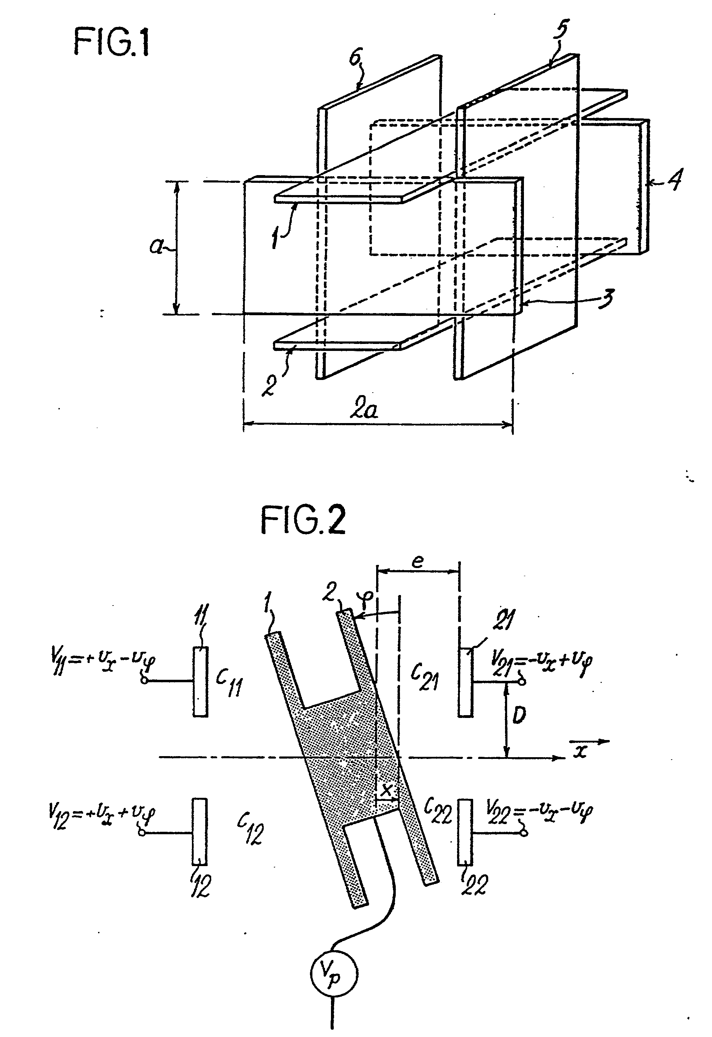

Figures 1 through 4 thus illustrate the prior art, while the remaining figures, 5 through 10, illustrate the preferred configuration for the accelerometer according to the present invention, wherein two leads to the test weight are used.

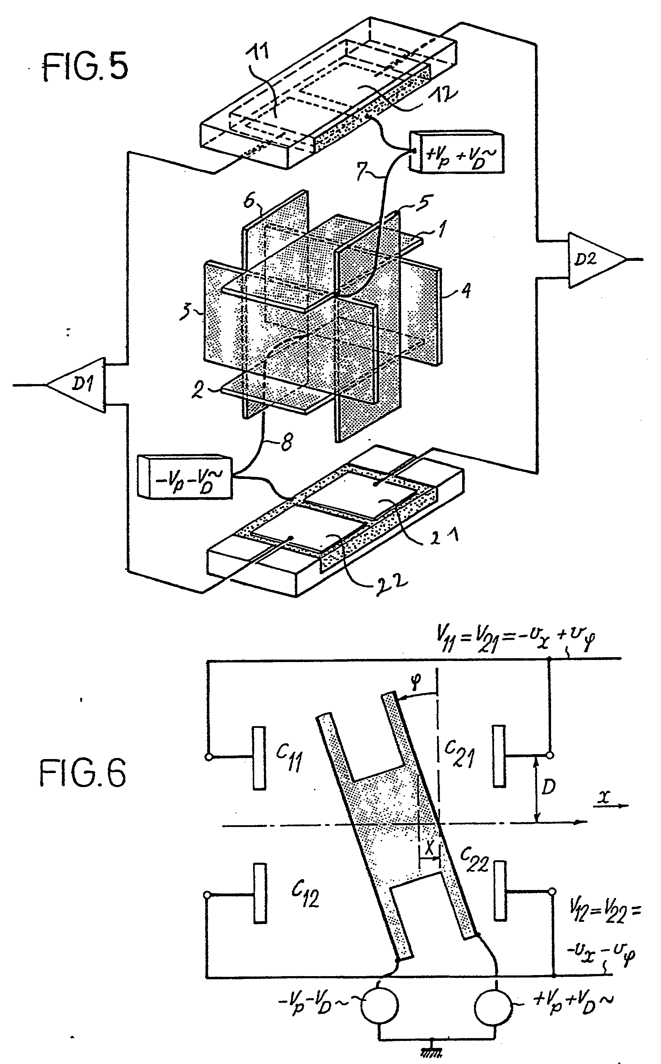

Figure 5 shows a test weight made up of six plates;

Figure 6 diagrams the preferred configuration, on each axis of the accelerometer, for the translation control $V_x$ and rotation control $V_\phi$ voltages, and for the bias or polarization $\pm V_p$ and detection $\pm VD$ voltages applied to opposite faces of the weight by means of two flexible leads ;

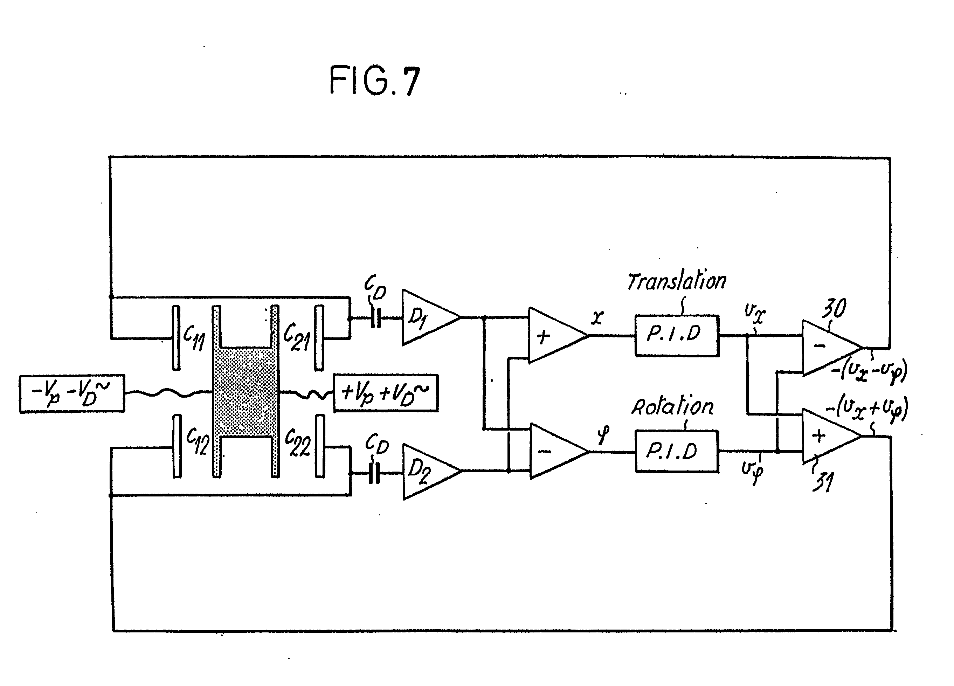

Figure 7 is a block diagram of the servocontrol loop corresponding to Figures 5 and 6.

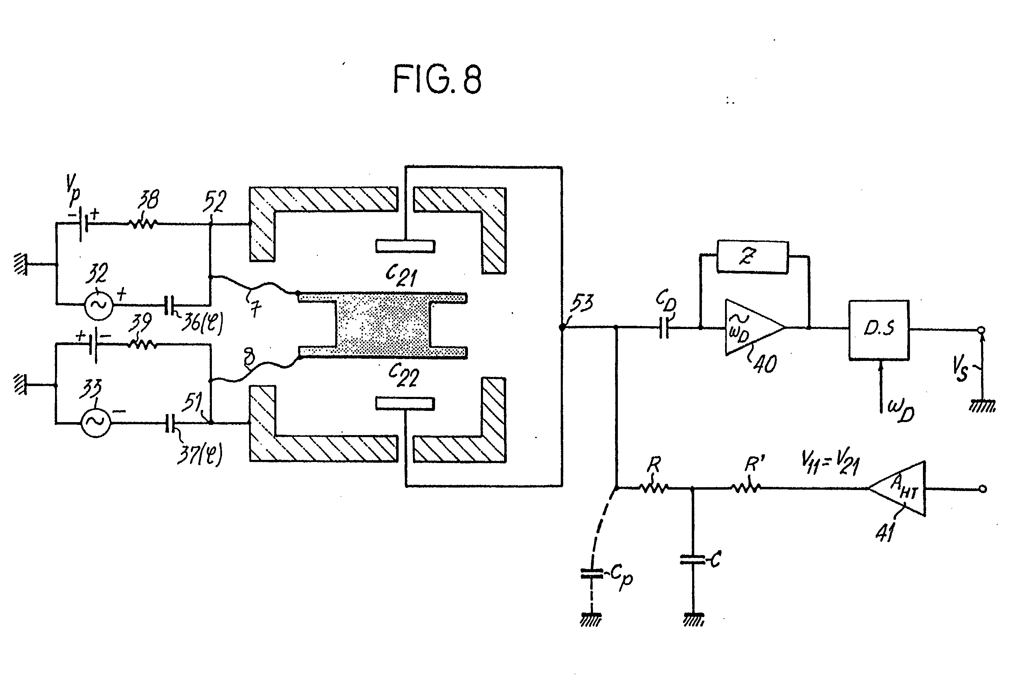

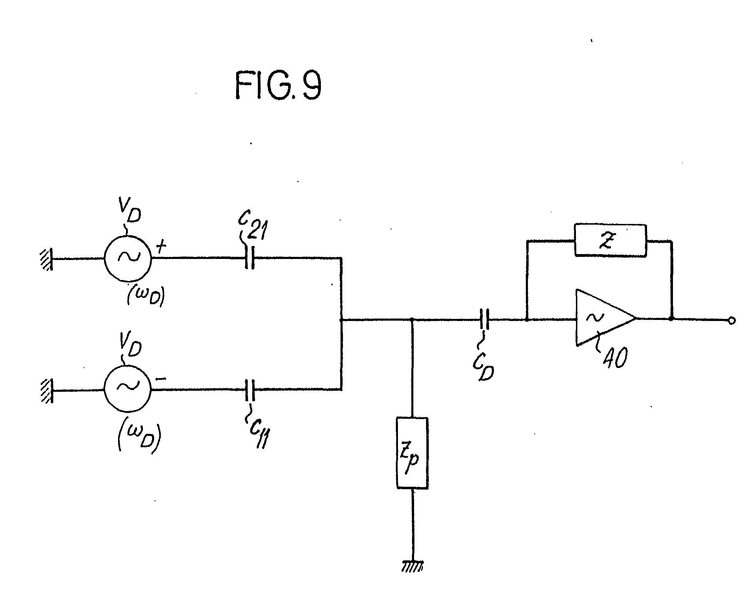

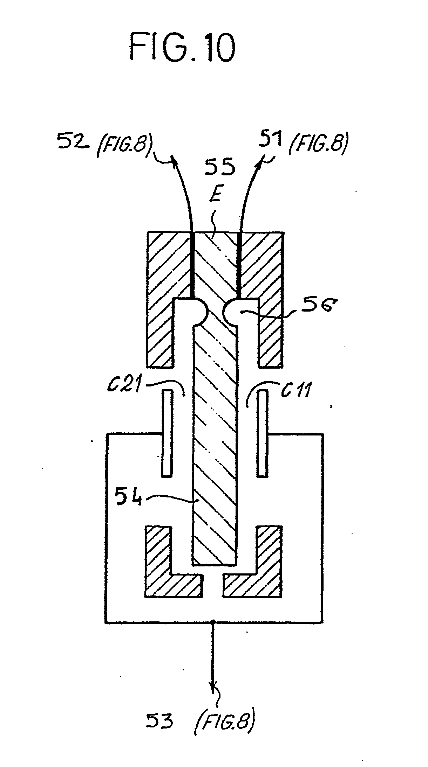

Figure 8 diagrams the operating principle of a differential transformerless capacitive detector designed for the accelerometer illustrated in Figures 5, 6 and 7 ;

Figure 9 gives a schematic diagram equivalent to Figure 8 for signals at the frequency of the detection signals; and

Figure 10 diagrams an alternative, hanging or "pendular" test weight usable in the accelerometer according to the invention, in lieu of the weight shown in Figure 5.

Referring first to Figure 2, x and φ are position parameters standing respectively for the translation and the rotation of the weight in relation to its neutral or nominal controlled position, i.e. that position in which it is centered with respect to the electrodes and its faces are respectively parallel to said electrodes. The voltages applied to the four electrodes of surface area S and to the weight impart to the latter, when x and φ are zero :
- a force along axis x of

$$F = \left[\frac{4\varepsilon S}{e^2} V_p\right] V_x$$

- and a torque having a moment normal to the plane of the figure

$$T = \left[\frac{4D\varepsilon S}{e^2} V_p\right] V_\varphi$$

This force and this torque are directly proportional to the translational and rotational control voltages $V_x$ and $V_\varphi$. This configuration accordingly makes it possible to achieve a linear position control of the weight in relation to the electrodes.

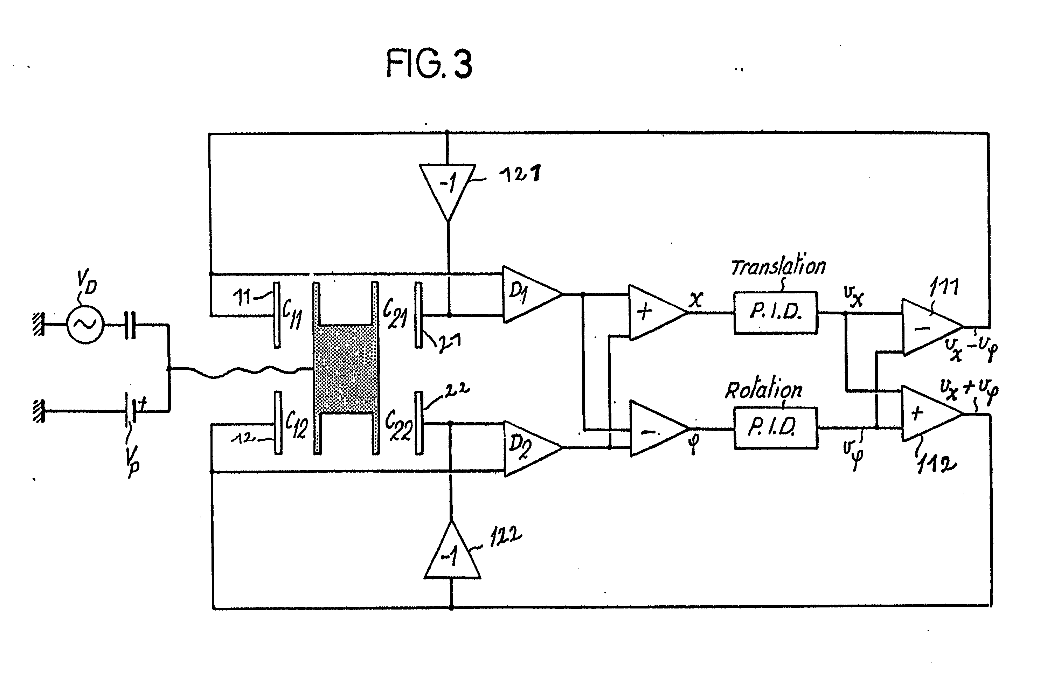

As Figure 3 shows, in order to realize such control, two capacitive sensors or detectors $D_1$ and $D_2$ are used to measure the translation x and the rotation φ of the weight : the four electrodes being identical and the detectors' sensitivities being the same, the sum of the outputs of the detectors solely reflects the translation x, whereas the difference between the detector outputs reflects the rotation φ.

Based on the position data so obtained, two correctors of the "proportional plus integral plus derivative" (PID) type determine the appropriate control voltages $V_x$ and $V_\varphi$ to keep the weight centered and stable in relation to the electrodes. The control voltage combinations $\pm V_x$ $\pm V_\varphi$ are applied to the four electrodes 11, 12, 21, 22 via four high-voltage amplifiers 111, 112, 121, 122. These amplifiers are shown in Fig. 3 as two amplifiers proper 111 and 112 and two unit inverters 121 and 122.

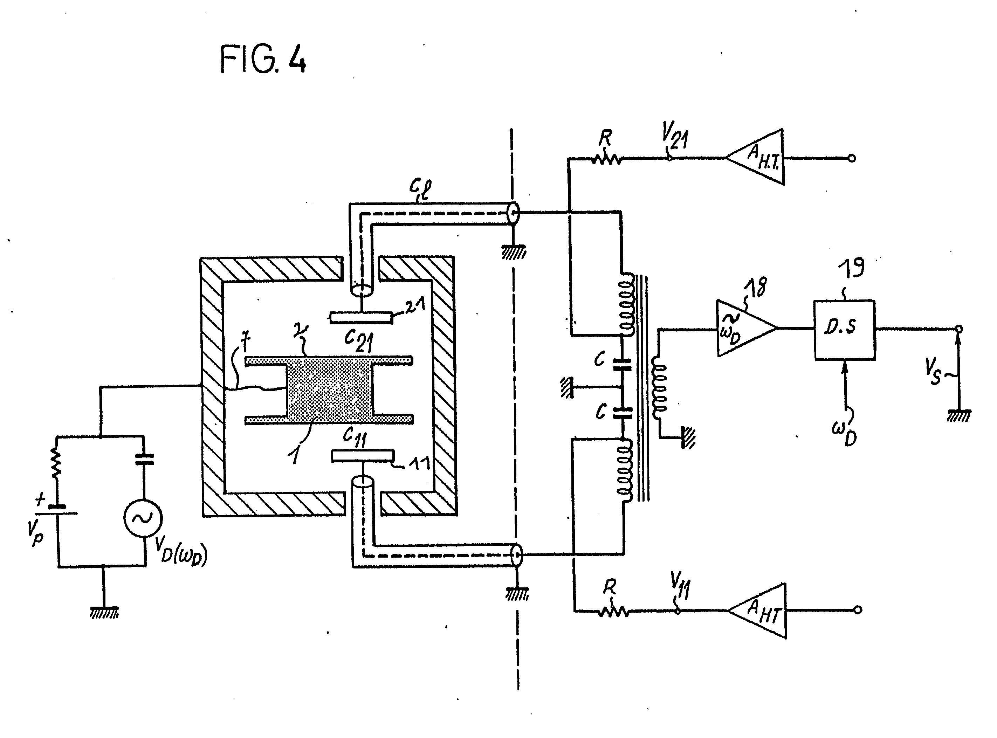

Figure 4 shows how the DC control voltages can be applied to the same electrodes already used to detect position through the coils of a differential transformer. Capacitances $C_{21}$ and $C_{11}$, the difference whereof must be measured by the capacitive detectors, are connected in a bridge circuit operating from the sinewave voltage $V_D$, at angular frequency $\omega_D$, applied to the weight via lead 7.

The detector output signal $V_s$ is obtained after passage of the bridge unbalance signal through an amplifier 18 and a synchronous demodulator 19.

Referring now to Figure 5, the six silica plates 1-6 making up the test weight are metallized to provide two mutually electrically insulated sets 1-3 and 4-6 of three plates, there being electrical continuity however through the three plates of each set. Each three-plate set is driven respectively to two potentials symmmetrical with respect to the frame potential $(+V_p +V_d)$ and $(-V_p -V_d)$ by means of two very flexible lead wires 7 and 8 respectively. Along each of the three axes of the accelerometer, the two pairs of electrodes used are connected to the inputs of two capacitive detectors $D_1$ and $D_2$.

Compared with the prior art just reviewed herein, and referring to Figure 6, the DC voltage differences (due to the control and polarizing voltages) are identical to those obtained in Figure 2. The new configuration of Figure 6 thus provides the same electrostatic force and torque, both of which are linear functions of the position control voltages.

Figure 7 shows that the servocontrols according to the invention are based on the same principle as those of Figure 3, except that they are simpler, since each pair of opposite electrodes is supplied from a single control amplifier 30 or 31. For example the output amplifier 30 is connected to both electrodes 11 and 21.

Figure 8, showing the operating principle of the invention, illustrates the operation of a capacitive detector, as well as the preferred principle for applying the DC control voltages to the electrodes already used for positioning sensing.

The oppositely phased detection signals $\pm V_D$ are supplied by generators 32, 33 having a very low internal impedance and are applied to opposite faces of the weight via the two flexible leads 7 and 8 and capacitors 36,37 whose values $\xi$ may be very high. The RC networks 36-38 and 37-39 utilized to apply the constant alternating voltages $+V_p$ and $-V_p$ and the DC detection voltages merely provide further filtering of the polarization voltage.

Figure 9 illustrates the equivalent circuit for the operation of the circuit diagrammed in Figure 8 when the detection signals are at angular frequency $\omega_D$.

The unbalance signal obtained at detection signal angular frequency $\omega_D$ when the two capacitors $C_{11}$ And $C_{21}$ are unequal is amplified selectively by amplifier 40 whose feedback impedeance Z is highest at angular frequency $\omega_D$.

The stray or parasitic capacitance $C_p$ of the link between the electrodes and the detector input capacitor $C_D$, taken together with the resistors R, R′, the capacitor C and the output impedance of control amplifier 41, constitutes an impedance $Z_p$ (Fig. 9) which is not susceptible of disturbing the detector's balance and moreover in practice has little effect on its sensitivity.

Concerning the DC control signal voltage ($V_{11}$ - $V_{21}$) to be applied to the electrodes, the circuit made up of resistors R, R′, capacitances C, $C_p$, $C_D$, $C_{11}$ and $C_{21}$, and amplifier 40 is sufficiently selective to ensure that changes in $V_{11}$ (or $V_{21}$) do not affect the measurement $V_s$ delivered by the detector.

The invention as just described, especially in its principle of operation illustrated by Figures 8 and 9, applies to the realization of a single-axis accelerometer which can be one of the elements of a two- or three-axis system.

In an alternative embodiment illustrated in figure 10, the cross-shaped test weight is replaced by a pendular test weight 54 articulated about a hinge (consisting for example of a necked portion 56) fixed on an end 55 made integral with the accelerometer frame. The test weight is insulating; its metallized, opposite plane fares are connected to the ±VD signal generators designated by numerals S51 and 52 in Figure 8 and its electrodes $C_{11}$–$C_{21}$ are connected to the capacitive detector 53 of the same figure.

It is possible to use a metallic test weight in the inventive accelerometer, in which case the weight is connected to the capacitive detector of Figure 8 and the electrodes are connected to the ±VD signal generators respectively (51 and 52 in Fig. 8). The test weight of this embodiment is thereby easier to manufacture, since no metallization step is required.

## Claims

1. Triaxial electrostatic accelerometer comprising:
- a test weight movable in relation to the accelerometer frame, having six electrically conducting plane faces arranged in pairs of two parallel faces, the faces of each pair being orthogonal to those of the other two pairs ;
- six electrodes connected to said frame, respectively associated with said faces and forming therewith capacitors;
- means for sensing two position parameters of the test weight through two sensing voltages ;
- means for deriving two position control voltages from said two position sensing voltages, and characterized in that :
- the six faces of the test weight are grouped into two sets of three faces with each set located in opposite trisectors of the test weight structure, the three faces of one set forming a first conductor electrically insulated from the second conductor formed by the three faces of the other set and that the accelerometer further comprises :
- two very flexible leads connected by one end to said first and second conductor, the sensing voltages being respectively applied to said leads ;
- means for applying said two position control voltages to two electrodes respectively associated with a face of the first conductor and a face of the second conductor.

2. Accelerometer according to claim 1 characterized in that the two position parameters are a translation of the test weight along an axis and a rotation around said axis, the two position sensing voltages are sinewaves in phase opposition and the two position control voltages are one and the same D.C. voltage.

## Patentansprüche

1. Dreiachsiger elektrostatischer Beschleunigungsmesser enthaltend:
- ein relativ zu dem Rahmen des Beschleunigungsmessers bewegliches Testgewicht, mit sechs elektrisch leitenden ebenen Flächen, die in Paaren zu zwei parallen Flächen angeordnet sind, wobei die Flächen jeden Paares orthogonal zu denen der anderen beiden Paare sind;

- sechs mit dem Rahmen verbundene Elektroden, welche beziehentlich den Flächen zugeordnet sind und mit diesen Kondensatoren bilden;
- Mittel zum Erfassen zweier Positionsparameter des Testgewichtes durch zwei Tast-Spannungen;
- Mittel zum Ableiten zweier Positionssteuerspannungen aus den Positions-Tast-Spannungen, dadurch gekennzeichnet, daß
- die sechs Flächen des Testgewichtes in zwei Sätze von drei Flächen gruppiert sind, wobei jeder Satz in gegenüberliegenden Drittelsektoren der Struktur des Testgewichtes gelegen ist, wobei die drei Flächen eines Satzes einen ersten Leiter bilden, der elektrisch vom zweiten Leiter isoliert ist, der durch die drei Flächen des anderen Satzes gebildet ist, und daß der Beschleunigungsmesser weiterhin aufweist:
- zwei sehr flexible Leitungen, die an einem Ende mit dem ersten und zweiten Leiter verbunden sind, wobei die Tast-Spannungen beziehentlich an die Leitungen angelegt sind;
- Mittel zum Anlegen der zwei Positionssteuerspannungn an zwei Elektroden, welche beziehentlich einer Fläche des ersten Leiters und einer Fläche des zweiten Leiters zugeordnet sind.

2. Beschleunigungsmesser nach Anspruch 1, dadurch gekennzeichnet, daß die zwei Positionsparameter eine Translation des Testgewichtes entlang einer Achse und eine Rotation um die Achse sind, daß die zwei Positions-Tast-Spannungen Sinuswellen mit entgegengesetzter Phase und die zwei Positionssteuerspannungen ein und dieselbe Gleichspannung sind.

## Revendications

1. Accéléromètre triaxial électrostatique comprenant:
- une masse d'épreuve mobile par rapport au corps de l'accéléromètre, ayant six faces planes conductrices électriquement disposées en paires de deux faces parallèles, les faces de chaque paire étant orthogonales à celles des deux autres paires;
- six électrodes connectées audit corps, respectivement associées auxdites faces et formant avec celles-ci des condensateurs;
- des moyens pour détecter deux paramètres de position de la masse d'épreuve grâce à deux tensions de détection;
- des moyens pour établir deux tensions de commande de position à partir desdites deux tensions de détection de position, et caractérisé en ce que:
- les six faces de la masse d'épreuve sont réunies en deux ensembles de trois faces chacun, situés dans des trisecteurs opposés du corps de la masse d'épreuve, les trois faces d'un ensemble formant un premier conducteur isolé électriquement du second conducteur formé par les trois faces de l'autre ensemble, et en ce que l'accéléromètre comprend en outre:
- deux fils très souples connectés par une extrémité auxdits premier et second conducteurs, les tensions de détection étant respectivement appliquées auxdits fils;
- des moyens pour appliquer lesdites deux tensions de commande de position à deux électrodes respectivement associées à une face du premier conducteur et une face du second conducteur.

2. Accéléromètre conforme à la revendication 1, caractérisé en ce que les deux paramètres de position sont une translation de la masse d'épreuve le long d'un axe et une rotation autour dudit axe, les deux tensions de détection de position sont des ondes sinusoïdales en opposition de phase et les deux tensions de commande de position sont une et une même tension continue.

FIG.1

FIG.2

FIG.3

# FIG. 4

EP 0 230 198 B1

FIG.5

FIG.6

# FIG.7

EP 0 230 198 B1

FIG.8

FIG.9

# FIG.10

52 *(FIG.8)*  55  51 *(FIG.8)*

E

56

C21  C11

54

53 *(FIG.8)*